# EUROPEAN PATENT SPECIFICATION

(11) **EP 1 537 160 B1**
(45) Date of publication and mention of the grant of the patent: **07.12.2005**
(21) Application number: 03795007.8
(22) Date of filing: 10.09.2003
(51) Int. Cl.: C08G 59/18, C08G 59/68, C07F 9/30

(54) **CURING AGENTS FOR EPOXY RESINS, USE THEREOF AND EPOXY RESIN CURED THEREWITH**
HÄRTER FÜR EPOXIDHARZE, VERWENDUNG DAVON UND DAMIT GEHÄRTETES EPOXIDHARZ
AGENTS DE POLYMERISATION POUR RESINES EPOXYDES, LEUR UTILISATION ET RESINE EPOXYDE POLYMERISEE AVEC LESDITS AGENTS DE POLYMERISATION

(30) Priority: 11.09.2002 DE 10242017
(43) Date of publication of application: 08.06.2005
(73) Proprietor: Schill + Seilacher Aktiengesellschaft, 71032 Böblingen (DE)
(72) Inventor: KELLER, Holger, 71069 Sindelfingen-Darmsheim (DE); GLAUNER, Udo, 71065 Sindelfingen (DE)
(74) Representative: Bunke, Holger
(86) International application number: PCT/EP2003/010067
(87) International publication number: WO 2004/024791

(56) References cited:
- DE-B- 1 154 624
- US-A1- 2001 014 706
- US-B1- 6 441 067

## Description

The invention relates to new, phosphorus-containing curing agents for epoxy resins which at the same time provide fire-inhibiting effects.

Commercially available epoxy resins are usually liquid, viscose, glassy or also crystalline substances which before being used are mixed with adequate curing agents and optionally also modified with solvents, reactive diluents (viscosity lowering epoxy resins), softeners, fillers, or pigments. As curing agents are used, for example, dicarboxylic acid anhydrides or amine curing agents such as diethylene triamine. There are systems of epoxy resins and curing agents which at room temperature cure immediately after the epoxy resin and curing agent are brought together, and there are systems which cure only after a certain "working time" after the epoxy resin and curing agent have been brought together, or only after a relatively high temperature has been exceeded. Since in the last mentioned systems the curing effect first occurs following a certain delay, the curing agents used therefor are occasionally designated as "latent curing agents."

The process of making epoxy resins fire retardant, as prescribed for many applications, previously was carried out by incorporating traditional flame-protection agents such as antimony trioxide or highly brominated organic compounds into the epoxy resin compositions. (See, for example, "International Plastics Flammability Handbook" 2nd edition, Carl Hanser Publishing House, Munich, 1990). Aside from the toxicological risks, the use of such traditional flame-protection agents often led to impairment of the mechanical and physical properties of the epoxy resins incorporating such agents therein. Therefore, it previously has been proposed to use reactive flame-protection agents which are bonded to the polymer structure of the epoxy resin such as, for example 10-Oxo-10H-9-oxa-10-phospha-phenanthrene known as "DOP" which can also be designated as 9,10-Dihydro-9-oxa-10-phospha-phenanthrene-10-oxide (see EP-B1-0 806 429; Claim 24).

In a trifunctional epoxy-Novolac resin, DOP reacts with the glycidyl groups of the resin according to the following reaction diagram:

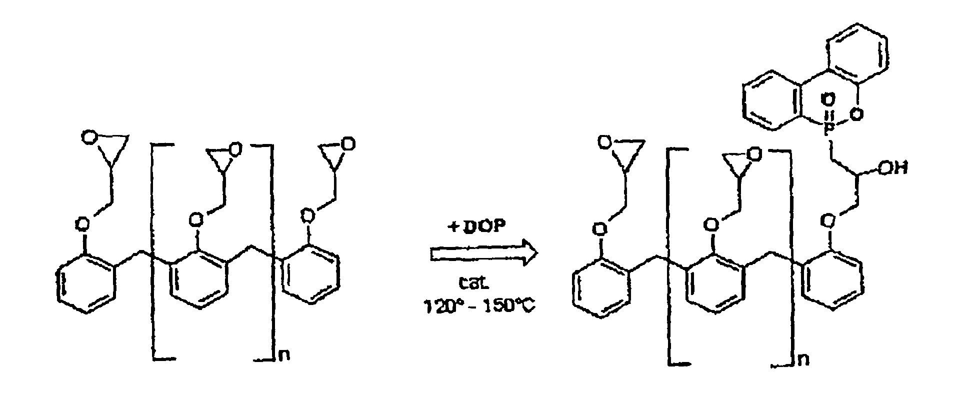

However, the above-described process for making the epoxy resins fire retardant with DOP is insufficient for many applications for the following reasons:
- For standard fire-protection modifying of epoxy resins there is required a phosphorus content of more than 2.2% by weight based on the total mass of the modified and cured epoxy resin. To attain such phosphorus content the portion of DOP had to comprise at least 60% of the modified resin.
- Such a high portion of fire-protection agent results in a reduction of the glass transition temperature (T_{g}). Depending on the epoxy resin, there can thus be used only glass transition temperatures of less than 150°C, dynamically measured by Dynamic Scanning Calometry ("DSC"). A T_{g} typical for such systems is 135°C (DSC). But epoxy resins to be used for preparing printed circuit board substrates or for other electronic purposes such as casting resins or embedding masses must have, with regard to the lead-free tin solder compositions in use at present, having melting points between about 185 and 205°C, a glass transition temperature of at least 150°C, preferably more than 160 or 165°C (DSC).
- DOP can only be used for a few epoxy resins as fire-protection agent directly bonding to the glycidyl groups. However, in case of a slight change of the chemical structure of the resin, for example, changing from phenol-Novolac resin to cresol-Novolac, incompatibility problems can appear.

DE-OS 100 06 592 discloses "latent" combination compounds consisting of amine curing agents for epoxy resins and fire-protection agents as, for example, DOP, the same as the use thereof for preparing cured, fire-retardant modified epoxy resins which, when present as one-component system, exhibit a working time of several hours during which no curing occurs, or which cure only when a certain relatively high threshold temperature is exceeded. In these known latent curing agents the nitrogen atom of the amino groups of an amine curing agent is directly bonded to the phosphorus atom of DOP.

The problem which the present invention addresses is to provide novel curing agents for epoxy resins which simultaneously exhibit curing and flame-inhibiting characteristics, which either alone or as co-curing agents have a phosphorus content required for the desired fire-protection of at least 2.2% by weight of the cured epoxy resin without lowering the glass transition temperature T_{g} of the resin to a value below 150°C (DSC).

According to the invention this problem is solved by a curing agent for epoxy resins that can be obtained by the steps of:
(A) An addition of at least one aldehyde or ketone of the formula I: 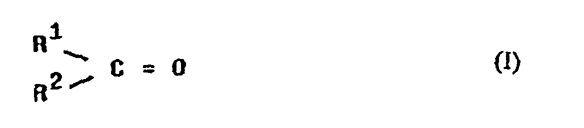 wherein R¹ and R² independently of each other are selected from a hydrogen atom, an optionally substituted C₁ - C₈-alkyl, aryl, alkaryl, or aralkyl group, to at least one phosphonous acid derivative of the formula II: 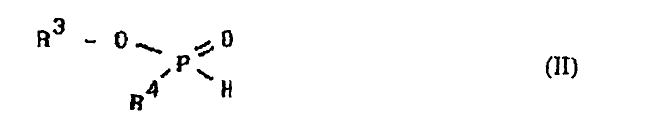 wherein R³ and R⁴ independently of each other are selected from an optionally substituted C₁ - C₈-alkyl, cycloalkyl, aryl, alkaryl, aralkyl, or heteroaryl group, or R³ and R⁴ together are selected from a mononuclear or polynuclear, optionally substituted, aromatic or non-aromatic ring system (first step) and
(B) a condensation reaction of the adduct obtained in the first step with at least one diamino or polyamino compound (second step).

It surprisingly has been found that when using the curing agent of the present invention for curing and making fire-retarding epoxy resins, the required phosphorus content for standard flame-protection modification of at least 2.2% by weight can be reached without harmful reduction of the glass transition temperature of the resin to below 150°C. There was on the contrary found an increase of the glass transition temperature to up to 170°C (DSC) with a phosphorus content of the resin of about 3% by weight. Thereby can be satisfied the need of halogen-free, fire-retardant and cured epoxy resin systems which can be used particularly for the preparation of printed circuit board substrates and other electronic parts which come into contact with lead-free solder tin of high melting point.

For the curing agents of the present invention, the aldehydes preferably comprise formaldehyde, paraformaldehyde, a formaldehyde rendering compound such as 1,3,5-trioxane or an optionally substituted benzaldehyde while as ketones can preferably be used an optionally substituted acetophenone or benzophenone.

As diamino or polyamino compounds preferably ethylene diamine, 4,4'-diamino-diphenyl methane, 4,4'-diamino-diphenyl sulphone (DDS), urea, or melamine can be used.

The addition reaction in the first step of preparation of the curing agents of the present invention can preferably be carried out at a temperature of from 50 to 150°C while the condensation reaction in the second step can be carried out preferably at a temperature of from 100 to 200°C, optionally in the presence of a catalyst.

For the preparation of the curing agent of the present invention, as phosphonous acid derivative there is preferably used the compound 10-Oxo-10H-9-oxa-10-phospha-phenanthrene (equivalent to 9,10-Dihydro-9-oxa-10-phospha-phenanthrene-10-oxide) known as "DOP" or a mixture containing DOP and 2'-hydroxydiphenyl-2-phosphinic acid, as known, for example from EP-B1-0833832.

In the preparation of the curing agent of the present invention, the molar ratio of the components (a) aldehyde or ketone, (b) phosphonous acid derivative and (c) diamino or polyamino compound is preferably from a:b:c=1:1:1 to a:b:c=x:x:l wherein x corresponds to the number of amino groups in one molecule of the polyamino compound.

Preferred embodiments of the inventive curing agent are characterized by a molecular structure containing at least one radical of the formulae III, IV, V or VI:

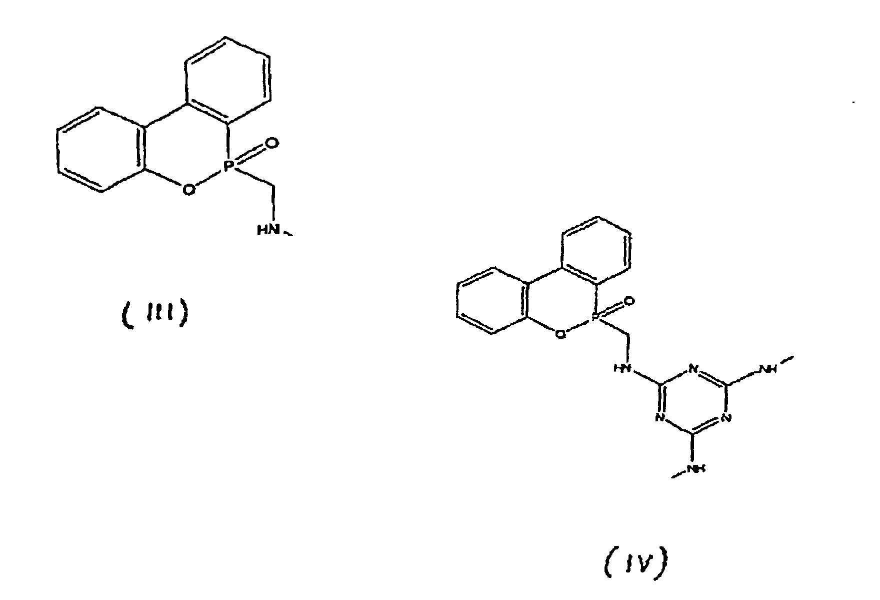

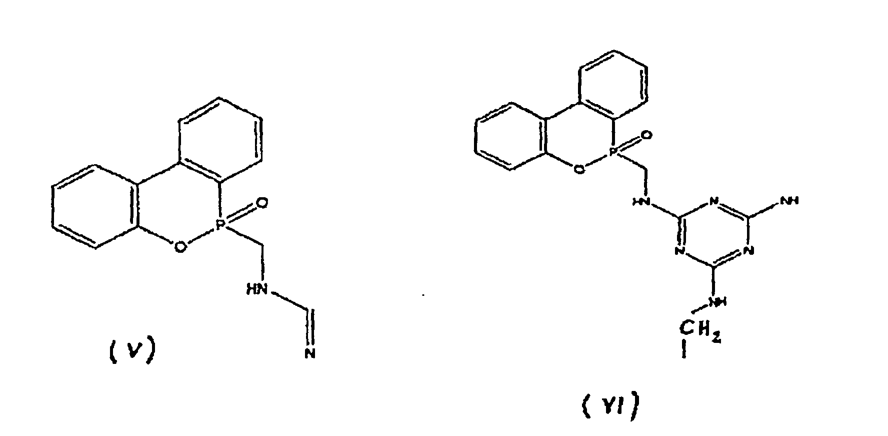

One specially preferred curing agent of the present invention is N,N',N"-Tris-(10-oxo-10H-9-oxa-10-phospha-phenanthrene-10-ylmethyl) -[1,3,5] triazine-2, 4, 6-triamine which has the structural formula VII:

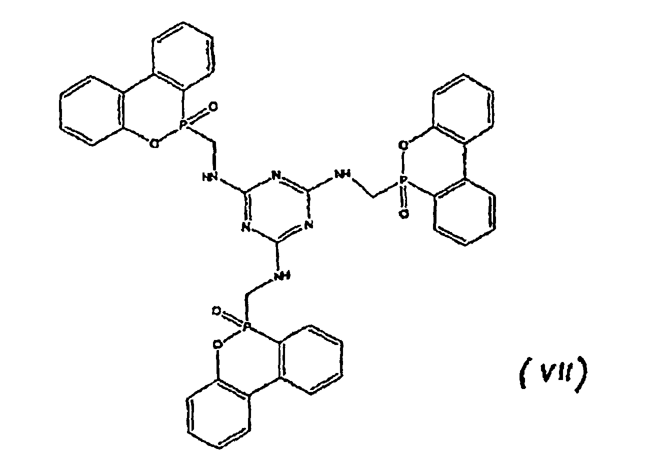

The curing agents of the present invention can be used as a single curing agent or as co-curing agent for epoxy resins, which means together with at least one other curing agent for epoxy resins, preferably together with an amine curing agent, specially one or more of the group consisting of diethylene triamine, dimethyl amino propylamine, isophoron-diamine, dicyan diamide (cyanoguanidine).

Specially advantageous is the use of the curing agent of the present invention for raising the glass transition temperature of the cured epoxy resin to above 150°C, particularly to above 165°C (DSC in each case).

Likewise particularly advantageous is the use of the curing agent of the present invention for flameproofing an epoxy resin, preferably preferred for preparing cured epoxy resins modified to be fire retardant and having a phosphorus content of at least 2.2% by weight, preferably of 2.8 to 3.2% by weight.

Another object of the present invention is constituted by epoxy resins cured and modified to be fire retardant with a curing agent of the present invention, said epoxy resins being preferably epoxy-Novolac resins.

The epoxy resin cured and modified to be fire retardant according to the present invention serves preferably for making printed circuit board substrates and other products in the field of microelectronics in which, due to the contact with molten lead-free tin solder usually having a melting point between about 185 and 205°C, a high glass transition temperature of at least 150°C (DSC) and at the same time an effective flame protection are especially important.

The invention is explained in detail herebelow with reference to the following working example:

### Example

### Preparation of the curing agent

### A) First step

40g (185 mmol) DOP were heated to 130°C, 15 g formaline solution (37% by weight) were added drop by drop at this temperature over 45 minutes while stirring. After another 30 minutes a white solid body formed which began to melt at about 140°C.

### B) Second step

The adduct generated in the first step was further heated to about 150°C. To the resulting clear solution were added 7.8 g melamine (61.7 mmol) and the mixture was heated over two hours to 200°C. The mixture was kept at 200°C until no more water was formed.

### Curing and flameproofing an epoxy resin

7 g of an epoxy-Novolac resin (LER N 740 available from the firm LG, Korea; epoxide number: 0.575 mol/100g) and 3g of an epoxy-Novolac resin (Ukanol EPUK available from the firm Schill + Seilacher, Boeblingen; epoxide number: 0.28 mole/100 g) were heated with 3 g of the curing agent of the present invention and prepared as above to 160°C and stirred until a clear solution formed. Into this solution was incorporated 2.4 g diamino diphenyl sulphone in solid form and stirred until a clear solution formed. The solution was held for 15 minutes at 160°C, then 30 minutes at 175°C and finally 3 hours at 195°C and thereby cured. There resulted a yellow transparent solid body of cured epoxy resin simultaneously modified to be fire retardant. The glass transition temperature of the resin prepared was 170°C (DSC) and had a phosphorus content of 2.9% by weight. The resulting cured sample satisfied the UL94 V-0 fire protection standard of Underwriters' Laboratories (USA).

## Claims

1. A curing agent for epoxy resins obtainable by
A) the addition of at least one aldehyde or ketone of the formula I: 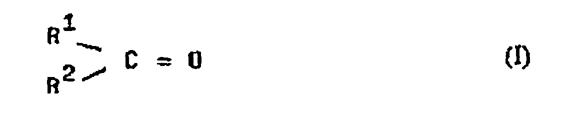 wherein R¹ and R² independently of each other designate a hydrogen atom, an optionally substituted C₁ - C₈-alkyl, aryl, alkaryl, or aralkyl, to at least one phosphonous acid derivative of the formula II 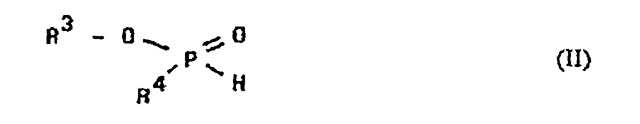 wherein R³ and R⁴ independently of each other designate an optionally substituted C₁ - C₈-alkyl, cycloaklyl, aryl, alkaryl, aralkyl, heteroalkyl, or R³ and R⁴ together are selected from a mononuclear or polynuclear, optionally substituted, aromatic or non-aromatic ring system (first step); and
B) a subsequent condensation of the adduct obtained in the first step with at least one diamino or polyamino compound (second step).

2. The curing agent of claim 1, **characterized in that** formaldehyde, paraformaldehyde, a formaldehyde rendering compound such as 1,3,5-trioxane or an optionally substituted benzaldehyde is used as said aldehyde.

3. The curing agent of Claim 1, **characterized in that** an optionally substituted acetophenone or benzophenone is used as said ketone.

4. The curing agent of any one of claims 1 to 3, **characterized in that** the addition reaction in the first step is carried out at a temperature of from 50 to 150°C.

5. The curing agent of any one of claims 1 to 4, **characterized in that** ethylene diamine, 4,4'-diamino-diphenyl methane, 4,4'-diamino-diphenyl sulphone (DDS), urea or melamine is used as said diamino or polyamino compound.

6. The curing agent of any one of claims 1 to 5, **characterized in that** the condensation reaction in the second step is carried out at a temperature of from 100 to 200°C, optionally in the presence of a catalyst.

7. The curing agent of any one of claims 1 to 6, **characterized in that** 10-Oxo-10H-9-oxa-10-phospha-phenanthrene (9,10-Dihydro-9-oxa-10-phospha-phenanthrene-10-oxide) ("DOP") or a mixture containing DOP and 2'-hydroxydiphenyl-2 -phosphinic acid is used as said phosphonous acid derivative.

8. The curing agent of any one of claims 1 to 7, **characterized in that** it is obtainable by reacting the components (a) aldehyde or ketone, (b) phosphonous acid derivative and (c) diamino or polyamino compound in a mole ratio of from a:b:c = 1:1:1 to a:b:c = x:x:1, wherein x corresponds to the number of amino groups in one molecule of the polyamino compound.

9. The curing agent of any one of claims 1 to 8, **characterized by** a molecular structure containing at least one radical of the formula III:

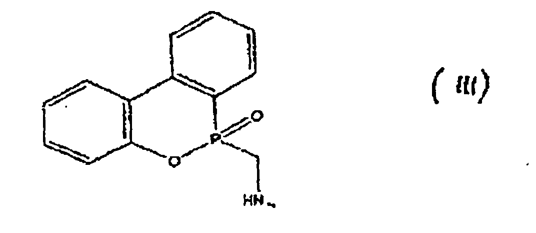

10. The curing agent of claim 9, **characterized by** a molecular structure containing at least one radical of the formula IV:

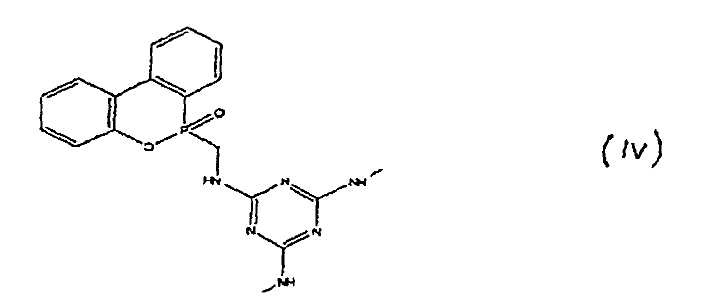

11. The curing agent of claim 9, **characterized by** a molecular structure containing at least one radical of the formula V:

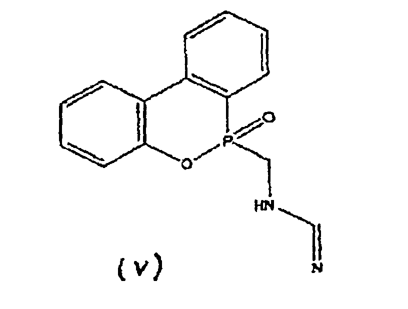

12. The curing agent of claim 10, **characterized by** a molecular structure containing at least one radical of the formula VI:

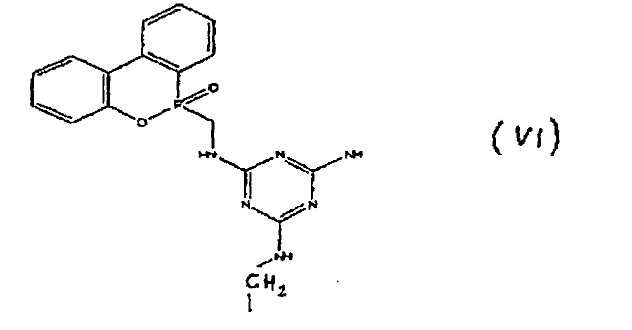

13. The curing agent of claim 12, namely N,N'N"-Tris-(10-oxo-10H-9-oxa-10-phospha-phenanthrene-10-ylmethyl)-[1,3,5] triazine-2,4,6-triamine.

14. Use of the curing agent of any one of claims 1 to 13 as a co-curing agent for epoxy resins, together with at least one other curing agent for epoxy resins.

15. The use of claim 14, together with an amine curing agent, especially with one or more of the group consisting of diethylene triamine, dimethyl aminopropylamine, isophorondiamine and dicyan diamide (cyanoguanidine).

16. The use of claim 14 or 15 for raising the glass transition temperature (T_{g}) of a cured epoxy resin to above 150°C (DSC).

17. The use of claim 16 for raising the glass transition temperature of a cured epoxy resin to above 165°C (DSC).

18. The use of any one of claims 14 to 17 for flameproofing an epoxy resin.

19. The use of claim 18 for producing cured epoxy resins modified to be fire retardant and having a phosphorus content of at least 2.2% by weight.

20. The use of claim 19 for producing cured epoxy resins modified to be fire retardant and having a phosphorus content of from 2.8 to 3.2% by weight.

21. An epoxy resin cured and modified to be fire retardant with a curing agent according to any one of claims 1 to 13.

22. The epoxy resin of claim 21, **characterized in that** it is an epoxy-Novolac resin.

23. The epoxy resin of claim 21 or 22, **characterized in that** it is a printed circuit board substrate.

## Patentansprüche

1. Härter für Epoxidharze, erhältlich durch
A) Addition mindestens eines Aldehyds oder Ketons der Formel I 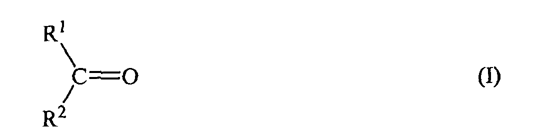 worin R¹ und R², unabhängig voneinander ein Wasserstoffatom, gegebenenfalls substituiertes C₁ - C₈-Alkyl, Aryl, Alkaryl oder Aralkyl bedeuten, an mindestens ein Phosphonigsäure-Derivat der Formel II 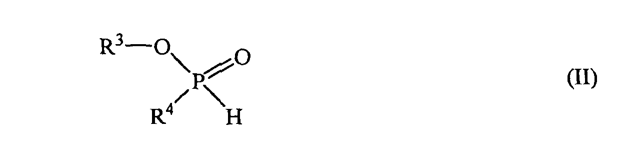 worin R³ und R⁴, unabhängig voneinander, gegebenenfalls substituiertes C₁ - Cg-Alkyl, Cycloalkyl, Aryl, Alkaryl, Aralkyl, Heteroaryl oder R³ und R⁴ gemeinsam ein ein- oder mehrkerniges, gegebenenfalls substituiertes aromatisches oder nicht-aromatisches Ringsystem darstellen, (erste Stufe) und
B) anschließende Kondensation des in der ersten Stufe erhaltenen Addukts mit mindestens einer Diamino- oder Polyamino-Verbindung (zweite Stufe).

2. Härter nach Anspruch 1, **dadurch gekennzeichnet, daß** als Aldehyd Formaldehyd, Paraformaldehyd, eine Formaldehyd abspaltende Verbindung wie 1,3,5-Trioxan oder ein gegebenenfalls substituierter Benzaldehyd verwendet wird.

3. Härter nach Anspruch 1, **dadurch gekennzeichnet, daß** als Keton ein gegebenenfalls substituiertes Acetophenon oder Benzophenon verwendet wird.

4. Härter nach einem der Ansprüche 1 bis 3, **dadurch gekennzeichnet, daß** die Additionsreaktion in der ersten Stufe bei einer Temperatur von 50 bis 150°C durchgeführt wird.

5. Härter nach einem der Ansprüche 1 bis 4, **dadurch gekennzeichnet, daß** als Diamino- oder Polyamino-Verbindung Ethylendiamin, 4,4'-Diaminodiphenylmethan, 4,4'-Diamino-diphenylsulfon (DDS), Harnstoff oder Melamin verwendet wird.

6. Härter nach einem der Ansprüche 1 bis 5, **dadurch gekennzeichnet, daß** die Kondensationsreaktion in der zweiten Stufe bei einer Temperatur von 100 bis 200°C, gegebenenfalls in Gegenwart eines Katalysators, durchgeführt wird.

7. Härter nach einem der Ansprüche 1 bis 6, **dadurch gekennzeichnet, daß** als Phosphonigsäure-Derivat 10-Oxo-10*H*-9-oxa-10-phospha-phenanthren (= 9,10-Dihydro-9-oxa-10-phospha-phenanthren-10-oxid) ("DOP") oder ein DOP und 2'-Hydroxydiphenyl-2-phosphinsäure enthaltendes Gemisch verwendet wird.

8. Härter nach einem der Ansprüche 1 bis 7, **dadurch gekennzeichnet, daß** er durch Umsetzung der Komponenten (a) Aldehyd oder Keton, (b) Phosphonigsäure-Derivat und (c) Diamino- oder Polyamino-Verbindung in einem Molverhältnis von a:b:c = 1:1:1 bis a:b:c = x:x:1 erhältlich ist, wobei x der Anzahl von Aminogruppen in einem Molekül der Polyamino-Verbindung entspricht.

9. Härter nach einem der Ansprüche 1 bis 8, **gekennzeichnet durch** eine Molekülstruktur, die mindestens einen Rest der Formel III 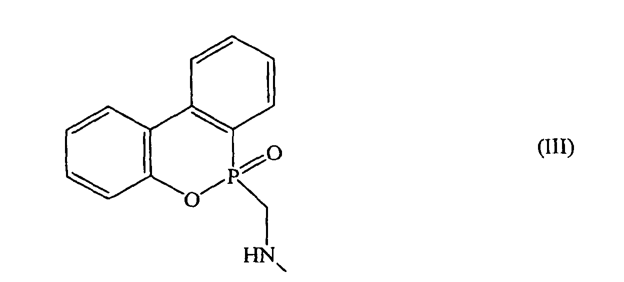 enthält.

10. Härter nach Anspruch 9, **gekennzeichnet durch** eine Molekülstruktur, die mindestens einen Rest der Formel IV 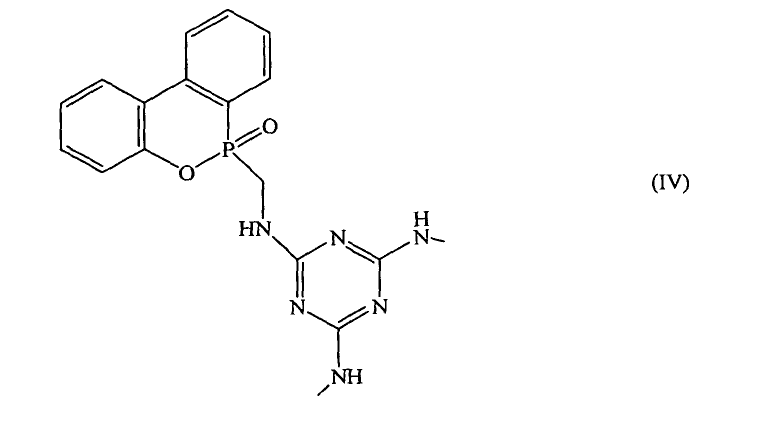 enthält.

11. Härter nach Anspruch 9, **gekennzeichnet durch** eine Molekülstruktur, die mindestens einen Rest der Formel V 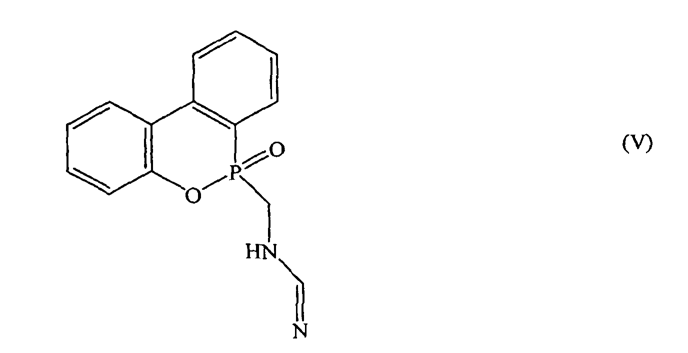 enthält.

12. Härter nach Anspruch 10, **gekennzeichnet durch** eine Molekülstruktur, die mindestens einen Rest der Formel VI 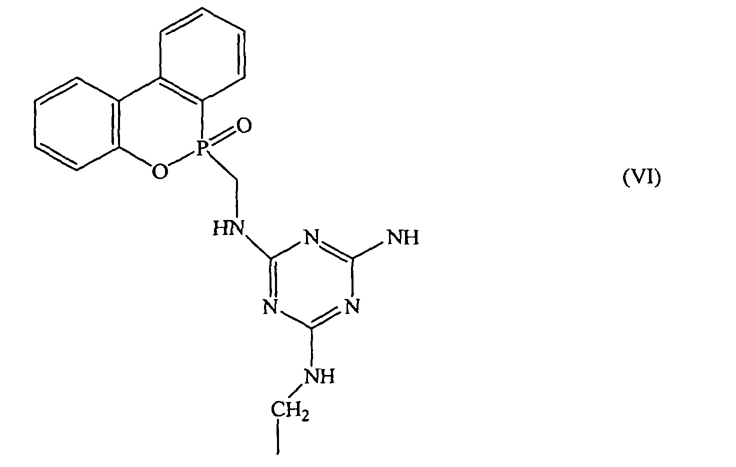 enthält.

13. Härter nach Anspruch 12, nämlich N, N', N"-Tris-(10-oxo-10*H*-9-oxa-10-phospha-phenanthren-10-ylmethyl)-[1,3,5]triazin-2,4,6-triamin.

14. Verwendung des Härters gemäß einem der Ansprüche 1 bis 13 als Cohärter für Epoxidharze, zusammen mit mindestens einem anderen Härter für Epoxidharze.

15. Verwendung nach Anspruch 14, zusammen mit einem Aminhärter, insbesondere mit einem oder mehreren aus der Gruppe Diethylentriarnin, Dimethylaminopropylamin, Isophorondiamin, Dicyandiamid (Cyanoguanidin).

16. Verwendung nach Anspruch 14 oder 15 zur Erhöhung der Glasübergangstemperatur (T_{g}) eines gehärteten Epoxidharzes auf über 150°C (DSC).

17. Verwendung nach Anspruch 16 zur Erhöhung der Glasübergangstemperatur eines gehärteten Epoxidharzes auf über 165°C (DSC).

18. Verwendung nach einem der Ansprüche 14 bis 17 zur Flammfestausrüstung eines Epoxidharzes.

19. Verwendung nach Anspruch 18 zur Herstellung flammfest ausgerüsteter, gehärteter Epoxidharze mit einem Phosphorgehalt von mindestens 2,2 Gew.-%.

20. Verwendung nach Anspruch 19 zur Herstellung flammfest ausgerüsteter gehärteter Epoxidharze mit einem Phosphorgehalt von 2,8 bis 3,2 Gew.-%.

21. Epoxidharz, gehärtet und flammfest ausgerüstet mit einem Härter gemäß einem der Ansprüche 1 bis 13.

22. Epoxidharz nach Anspruch 21, **dadurch gekennzeichnet, daß** es ein Epoxynovolak-Harz ist.

23. Epoxidharz nach Anspruch 21 oder 22, **dadurch gekennzeichnet, daß** es ein Leiterplattensubstrat ist.

## Revendications

1. Agent de durcissement pour des résines époxy pouvant être obtenu par
A) l'addition d'au moins un aldéhyde ou une cétone de formule I : 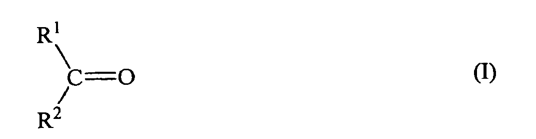 où R¹ et R², indépendamment l'un de l'autre, désignent un atome d'hydrogène, un groupe alkyle en C₁ à C_{g}, aryle, alkaryle ou aralkyle facultativement substitué, sur au moins un dérivé d'acide phosphoneux de formule II 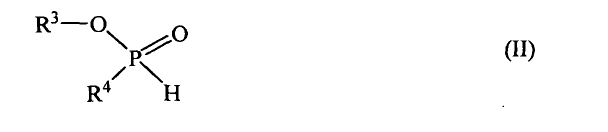 où R³ et R⁴, indépendamment l'un de l'autre, désignent un groupe alkyle en C₁ à C₈, cycloalkyle, aryle, alkaryle, aralkyle, hétéroalkyle facultativement substitué, ou R³ et R⁴ ensemble sont choisis parmi un système de cycle mononucléaire ou polynucléaire, facultativement substitué, aromatique ou non aromatique (première étape) ; et
B) une condensation ultérieure du produit d'addition obtenu dans la première étape avec au moins un composé diamino ou polyamino (seconde étape).

2. Agent de durcissement selon la revendication 1, **caractérisé en ce que** du formaldéhyde, du paraformaldéhyde, un composé rendant du formaldéhyde tel que le 1,3,5-trioxane ou un benzaldéhyde facultativement substitué est utilisé en tant que ledit aldéhyde.

3. Agent de durcissement selon la revendication 1, **caractérisé en ce qu'**une acétophénone ou benzophénone facultativement substituée est utilisée en tant que ladite cétone.

4. Agent de durcissement selon l'une quelconque des revendications 1 à 3, **caractérisé en ce que** la réaction d'addition dans la première étape est réalisée à une température de 50 à 150 °C.

5. Agent de durcissement selon l'une quelconque des revendications 1 à 4, **caractérisé en ce que** de l'éthylène diamine, du 4,4'-diamino-diphényl méthane, de la 4,4'-diamino diphényl sulfone (DDS), de l'urée ou de la mélamine est utilisé en tant que ledit composé diamino ou polyamino.

6. Agent de durcissement selon l'une quelconque des revendications 1 à 5, **caractérisé en ce que** la réaction de condensation dans la seconde étape est réalisée à une température de 100 à 200 °C, facultativement en présence d'un catalyseur.

7. Agent de durcissement selon l'une quelconque des revendications 1 à 6, **caractérisé en ce que** du 10-oxo-10H-9-oxa-10-phospha-phénanthrène (9,10-dihydro-9-oxa-10-phospha-phénanthrène-10-oxyde) (« DOP ») ou un mélange contenant du DOP et de l'acide 2'-hydroxydiphényl-2-phosphinique est utilisé en tant que ledit dérivé d'acide phosphoneux.

8. Agent de durcissement selon l'une quelconque des revendications 1 à 7, **caractérisé en ce qu'**il peut être obtenu en faisant réagir les composants (a) aldéhyde ou cétone, (b) dérivé d'acide phosphoneux et (c) composé diamino ou polyamino en un rapport en mole de a : b : c = 1 : 1 : 1 à a : b : c = x : x : 1, où x correspond au nombre de groupes amino dans une molécule du composé polyamino.

9. Agent de durcissement selon l'une quelconque des revendications 1 à 8, **caractérisé par** une structure moléculaire contenant au moins un radical de formule III :

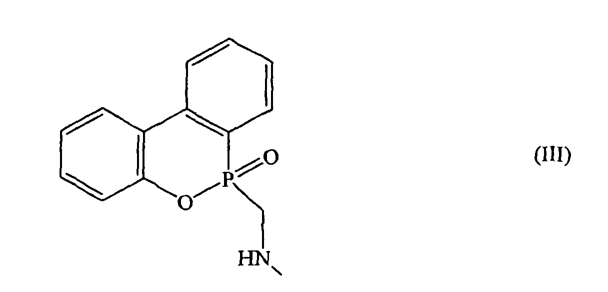

10. Agent de durcissement selon la revendications 9, **caractérisé par** une structure moléculaire contenant au moins un radical de formule IV :

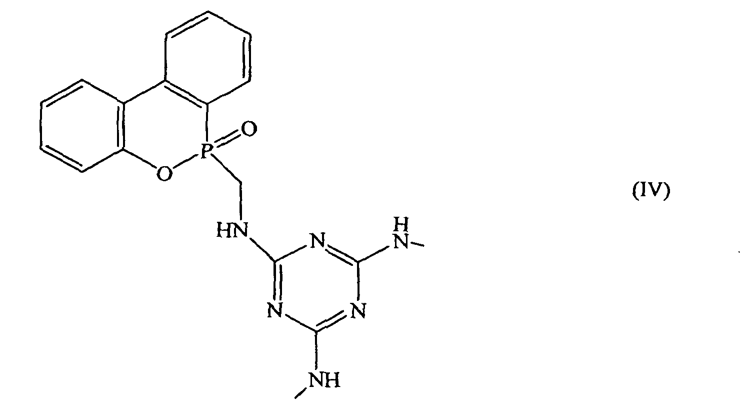

11. Agent de durcissement selon la revendications 9, **caractérisé par** une structure moléculaire contenant au moins un radical de formule V :

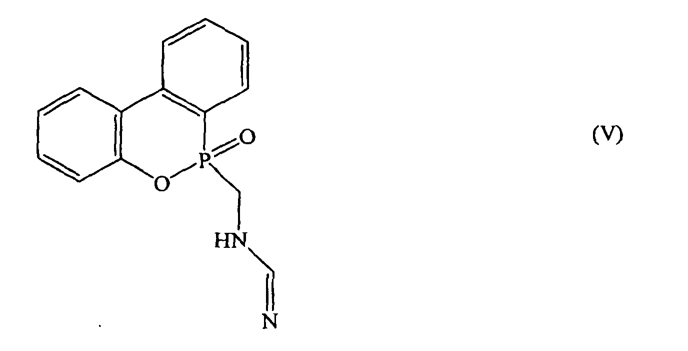

12. Agent de durcissement selon la revendications 10, **caractérisé par** une structure moléculaire contenant au moins un radical de formule VI :

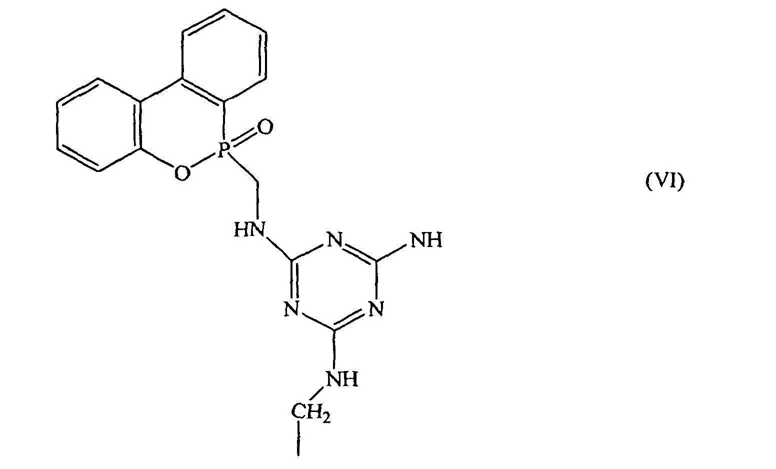

13. Agent de durcissement selon la revendications 12, à savoir la N,N'N"-tris-(10-oxo-10H-9-oxa-10-phospha-phénanthrène-10-ylméthyl)-[1,3,5]triazine-2,4,6-triamine.

14. Utilisation de l'agent de durcissement selon l'une quelconque des revendications 1 à 13, en tant que co-agent de durcissement pour des résines époxy, conjointement avec au moins un autre agent de durcissement pour des résines époxy.

15. Utilisation selon la revendication 14, conjointement avec un agent de durcissement amine, spécialement avec un ou plusieurs dans le groupe consistant en la diéthylène triamine, la diméthyl aminopropylamine, l'isophorondiamine et le dicyan diamide (cyanoguanidine).

16. Utilisation selon la revendication 14 ou 15, pour élever la température de transition vitreuse (T_{g}) d'une résine époxy durcie à plus de 150°C (DSC).

17. Utilisation selon la revendication 16, pour élever la température de transition vitreuse d'une résine époxy durcie à plus de 165 °C (DSC).

18. Utilisation selon l'une quelconque des revendications 14 à 17, pour rendre une résine époxy anti-déflagrante.

19. Utilisation selon la revendication 18, pour produire des résines époxy durcies modifiées pour être ignifuges et ayant une teneur en phosphore d'au moins 2,2 % en poids.

20. Utilisation selon la revendication 19, pour produire des résines époxy durcies modifiées pour être ignifuges et ayant une teneur en phosphore de 2,8 à 3,2 % en poids.

21. Résine époxy durcie et modifiée pour être ignifuge avec un agent de durcissement selon l'une quelconque des revendications 1 à 13.

22. Résine époxy selon la revendication 21, **caractérisée en ce qu'**elle est une résine époxy-novolaque.

23. Résine époxy selon la revendication 21 ou 22, **caractérisée en ce qu'**elle est un substrat de carte de circuit imprimé.
